# EUROPEAN PATENT SPECIFICATION

(11) **EP 0 412 420 B1**
(45) Date of publication and mention of the grant of the patent: **16.03.1994**
(21) Application number: 90114761.1
(22) Date of filing: 01.08.1990
(51) Int. Cl.: A44B 19/26

(54) **Method of and apparatus for joining slider body and pull tab**
Verfahren und Vorrichtung zur Zusammenfassung eines Schiebers an eine Zuglasche
Procédé et dispositif pour assembler le curseur et la tirette d'une fermeture à glissière

(30) Priority: 11.08.1989 JP 208912/89
(43) Date of publication of application: 13.02.1991
(73) Proprietor: YKK CORPORATION, Chiyoda-ku, Tokyo (JP)
(72) Inventor: Yoneda, Masataka, Toyama-ken (JP); Nakamura, Shunichi, Shimoniikawa-gun, Tokyama-ken (JP)
(74) Representative: Casalonga, Axel

(56) References cited:
- GB-A- 2 187 230
- US-A- 2 186 693
- US-A- 2 354 690
- US-A- 2 711 574

## Description

The present invention generally relates to a method of and an apparatus for assembling sliders and particularly a method of and an apparatus for joining a slider body and a pull tab diecasted separately from each other.

JP-B-125563 discloses a conventional slider-assembling apparatus of the type described above. The conventional apparatus comprises a pair of juxtaposed slant chutes, the first chute for feeding a series of slider bodies from a slider body hopper to one end of a horizontal transport path and the second chute for feeding a series of pull tabs from a pull tab hopper to a position above the transport path a little ahead of the path end. The leading slider body rests flat on the transport path with its attachment lug opened forwards, while the leading pull tab hangs at the end of the second chute via its own gravity with its attachment aperture directed downwards ready to be caught by the opened lug of the slider body. The leading slider body is pushed forwards by a pusher horizontally along the transport path, thus causing the distal end of the attachment lug on the slider body to catch the aperture of the leading pull tab hanging from above. The slider body continues to advance until it stops at a slider-assembling station, where, an anvil member advances along the transport path from its opposite end, to intrude into the slider body. At this instant, a presser rod descends to press down the distal end of the attachment lug to thereby confine the aperture of the pull tab to the attachment lug, so that the pull tab is pivotally joined to the attachment lug on the slider body. Thereafter, the anvil member detracts from the assembling station while holding the assembled slider thereon and then discharges the assembled slider through a withdrawal exit of the apparatus.

Although this conventional assembling apparatus proves to be satisfactory to some extent, it suffers from several disadvantages. Since a pull tab is merely hanging before the slider assembling station, the pull tab is prone to be laterally displaced from the path of the attachment lug of the slider body. If the slider body is pushed forwards by the pusher in this disposition, the attachment lug fails to catch the aperture of the pull tab, and the pull tab can not be joined to the slider body.

Since the aperture in the pull tab varies in shape, size and position; the attachment lug must be spread apart from the upper surface of the slider body as widely as possible in order to assuredly catch the various apertures of the hanging pull tab. Since the attachment lug is spread apart so widely, closing the attachment lug for joining the pull tab to the slider body causes the lug to be subjected to severe deformation, so the attachment lug is more likely to break or or be damaged.

Furthermore, there are problems that two slider bodies are inclined to be erroneously transported at the same time by a pusher and that the front end of the pusher is apt to be jammed into the preceding horizontal slider body and the ensuing inclined slider body. These problems result in the apparatus becoming inoperative. Consequently, smooth transportation of the slider body from the chute to the slider-assembling station cannot be accomplished.

With the foregoing difficulties in view, it is therefore an object of the present invention to provide a method of and an apparatus for joining a slider body and a pull tab wherein assembling operation of sliders can be carried out very reliably and efficiently.

According to the first aspect of the present invention, there is provided a method of joining a slider body having an attachment lug on the upper surface thereof and a pull tab having an attachment portion, the method comprising the steps of: continuously feeding a series of pull tabs to one end of a horizontal transport path; continuously feeding a series of slider bodies to the other end of the horizontal transport path; placing a lowermost slider body and lowermost pull tab into horizontal posture and into opposed relation to each other on the horizontal transport path; moving the lowermost slider body and the lowermost pull tab towards each other to thus bring the attachment lug of the former and the attachment portion of the latter into registry with each other; and joining the attachment lug of the slider body and the attachment portion of the pull tab.

According to the second aspect of the present invention, there is provided an apparatus for joining a slider body having an attachment lug on the upper surface thereof and a pull tab having an attachment portion, the apparatus comprising: a first chute for continuously feeding a series of slider bodies; a first horizontal guide channel communicating with the first chute for receiving the lowermost slider body in horizontal posture; a second chute disposed in opposed relation to the first chute for continuously feeding a series of pull tabs; a pull tab carrier disposed beneath the lower end of the second chute for receiving the lowermost pull tab in a horizontal posture and reciprocable towards and away from the first horizontal guide channel for moving the lowermost pull tab towards the lowermost slider body to bring the attachment lug of the slider body and the attachment portion of the pull tab into registry with each other; and means for joining the attachment lug of the slider body and the attachment portion of the pull tab at a slider-assembling station.

Many other advantages and features of the present invention will become manifest to those versed in the art upon making reference to the detailed description and the accompanying drawings in which preferred structural embodiments incorporating the principles of the present invention are shown by way of illustrative example.
FIG. 1 is a fragmentary perspective view of an apparatus for joining a slider body and a pull tab according to the present invention;
FIG. 2 is a perspective view of a slider body and a pull tab to be joined with the apparatus of FIG. 1;
FIGS. 3(A) through 3(E) are fragmentary cross-sectional views of the apparatus of FIG. 1, showing the sequential steps of joining the slider body and the pull tab;
FIG. 4 is a perspective view of a slider-assembling station and the adjacent elements of an apparatus according to another embodiment of the present invention;
FIG. 5 is a perspective view of a slider body and a pull tab to be joined with the apparatus of FIG. 4; and
FIG. 6 is a fragmentary cross-sectional view of an apparatus according to still another embodiment of the present invention.

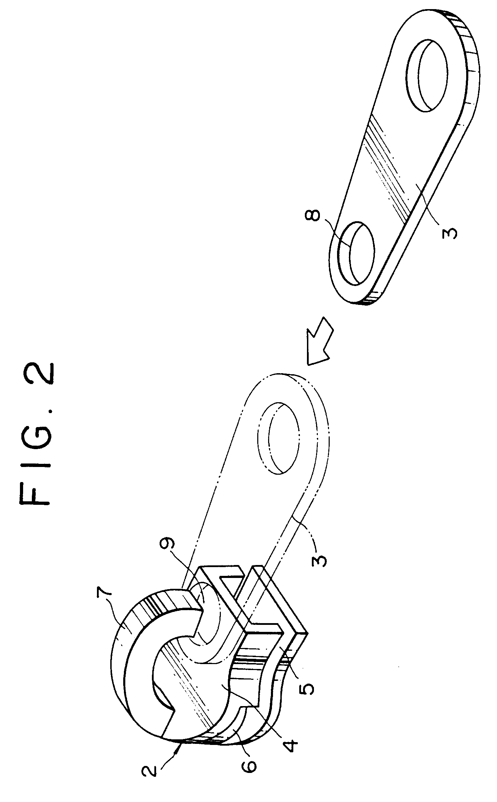

As best shown in FIG. 2, through a method and with an apparatus according to the present invention, a slider body 2 and a pull tab 3 are joined together to thus provide a slide fastener slider 1. The slider body 2 comprises a pair of upper and lower wings 4, 5 integrally joined together at their respective front ends by a diamond or a neck portion 6. The upper wing 4 has on its upper surface an arcuate attachment lug 7. The arcuate attachment lug 7 has its one end secured to the front end of the upper wing 4 and has its other end spaced from the upper surface of the upper wing 4 to thus define therewith a gap 9 which is slightly greater than the thickness of the pull tab 3. The pull tab 3 is in the shape of a flat plate and has in its one end an aperture 8 through which to insert the attachment lug 7 for pivotal attachment of the pull tab 3 to the slider body 2.

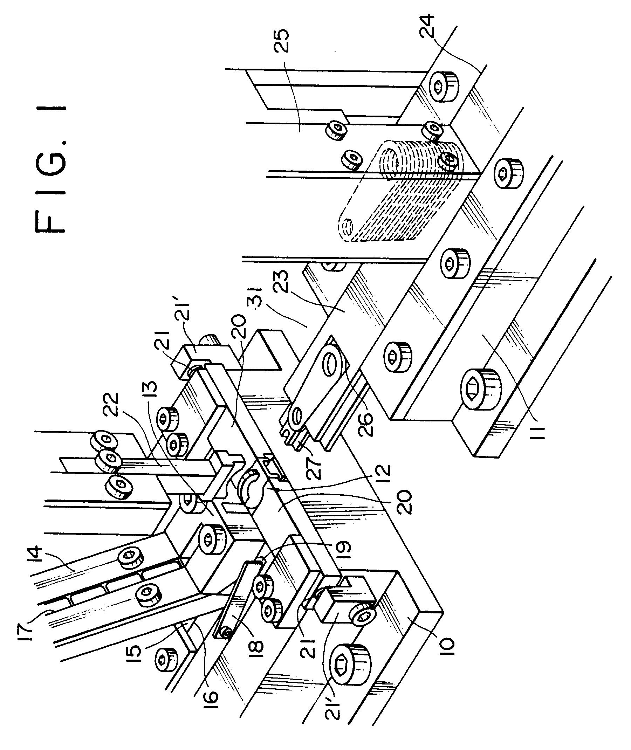

An apparatus according to the present invention broadly comprises a pair of first and second bases 10, 11 arranged in opposed relation to each other with a predetermined distance disposed therebetween. A slider-assembling station 12 is provided on the end of the first base 10 which faces the second base 11. A guide member 13 is disposed on the first base 10 behind the slider-assembling station 12. A first slant chute 14 is disposed behind the guide member 13. A first guide channel 16 is provided longitudinal to the first base 10 and beneath the guide member 13. The guide member 13 functions to guide slider bodies 2 when they slide down from the first slant chute 14 to the horizontal guide channel 16. A pusher 15 reciprocates guidedly along the first guide channel 16 towards and away from the slider-assembling station 12. The pusher 15 has at its front end a stepped portion 15′ which is slightly longer than the distance between the slider-assembling station 12 and the lower end of the slanting first chute 14. The pusher 15 may be driven by a piston cylinder or a cam (not shown). The first chute 14 has a elongated guide groove 17 formed in the upper surface thereof and is adapted to feed the slider bodies 2 with their attachment lugs fitted through the guide groove 17. The first chute 14 extends at an angle downwards from a vibrating hopper (not shown). A pair of stoppers 19, 19 are provided one on each side of the first guide channel 16. A pair of plate springs 18, 18 (merely one shown for brevity) are also secured one on each side of the first guide channel 16 and normally urge the stoppers 19, 19 towards each other. A pair of elongated holder plates 20, 20 are disposed normal to the first base 10 and provided one on each side of the slider assembling station 12 for reciprocation towards and away from each other. The opposed mating holder plates 20, 20 have their respective opposed ends so profiled as to snugly fit the outline of the slider body 2. A pair of spring holders 21′, 21′ are secured one to each side of the first base 10. One compression spring 21 is provided on each respective spring holder 21′ to act between the spring holder 21′ and the other end of the holder plates 20 so as to normally urge the opposed holder plates 20, 20 toward each other, so that, when pushed forward by the pusher 15, the slider body 2 is temporarily retained by and between the holding plates 20, 20 at the slider-assembling station 12. As shown in FIG. 1, over the slider-assembling station 12, there is provided a punch 22 which is adapted to vertically reciprocate toward and away from the slider-assembling station 12 to press the attachment lug 7 of the slider body 2 down so as to cause the distal end thereof to fit into the aperture 8 of the pull tab 3.

A second guide channel 24 is formed longitudinally in the second base 11 and is disposed in alignment with the first guide channel 16. Along the second guide channel 24 a pull tab carrier 23 is mounted in such a way as to slidably reciprocate towards and away from the slider-assembling station 12 on the first base 10. The pull tab carrier 23 is driven by a piston cylinder, a cam means or a like driving means (not shown), as is the case with the pusher 15. The second guide channel 24 coacts with the first guide channel 16 to jointly constitute a horizontal transport path along which the slider body 2 and the pull tab 3 move towards each other for joining thereof. There stands an upstanding second chute 25 above the second guide channel 24 in such a manner that the pull tab carrier slidably reciprocates along the lower edge of the upstanding second chute 25. A series of pull tabs 3 are piled up within the second chute 25. With such construction, pull tabs 3 are fed onto the pull tab carrier 23 one by one via their own gravity. Instead of the upstanding chute 25, a slant chute may be employed.

The front end of the pull tab carrier 23 is recessed in its upper surface so as to provide a pull tab bed 26. The pull tab bed 26 conforms to the contour of the majority of a pull tab 3, so that the pull tab 3 is almost received in the pull tab bed 26 with the aperture 8 projecting beyond the front edge of the pull tab bed 26, as better shown in FIG. 1. A trimming jaw 27 is provided integrally on the front end surface of the pull tab carrier 23 so as to project towards the slider-assembling station 12. The trimming jaw 27 is adapted to intrude into the interior of the slider body 2 in order to remove burs therefrom.

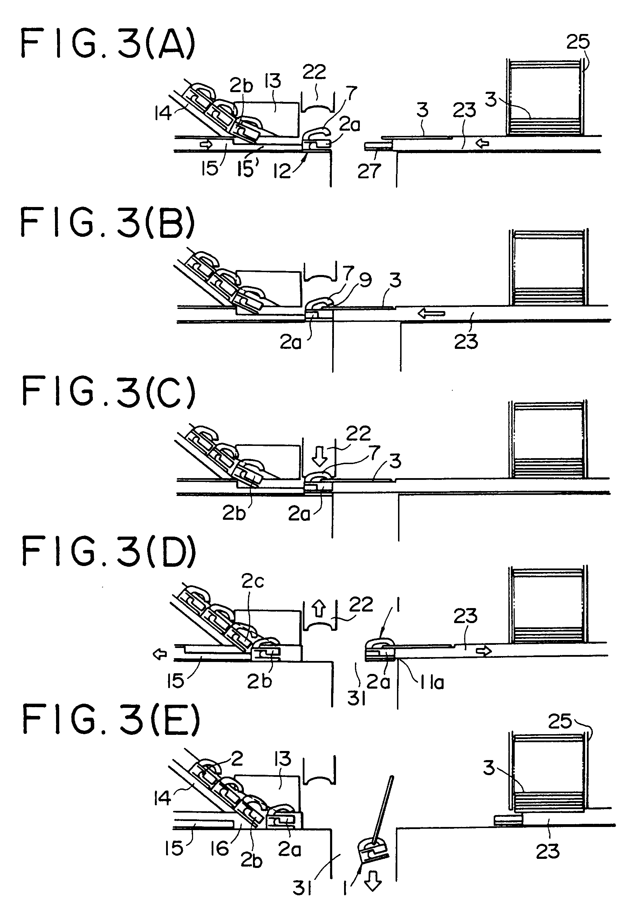

Turning now to the operation of the apparatus according to the present invention. FIG. 3 (E) shows that the slider 1 has been assembled and discharged through the withdrawal exit 31 defined between the first and second base 10, 11 and, at the same time, the apparatus is ready for the next cycle of assembling a slider. In this step, the pusher 15 and the pull tab carrier 23 assume their respective retracted positions. The lowermost slider 2a rests in horizontal posture on the first guide channel 16 and is temporarily retained by and between the opposed stoppers 19, 19 under the bias of the respective plate springs 18, 18. The second lowermost slider 2b still partly lies within the first chute 14 but has its front edge touching the bottom of the first guide channel 16. At this position, the second lowermost slider 2b remains inclined at the same angle as it was inclined while sliding down the first chute 14. At this step, the pull tab carrier 23 receives the lowermost pull tab 3 from the upstanding second chute 25.

As shown in FIG. 3(A), then, both the pusher 15 and the pull tab carrier 23 are activated to advance towards the slider-assembling station 12. The advancing pusher 15 first causes the second lowermost slider 2b to ride on the upper surface of the stepped portion 15′ thereof so that the slider 2b is angularly moved to thus slacken the angle of inclination. Continued advance of the pusher 15 then causes the lowermost slider 2a to be transported to the slider-assembling station 12, at which the slider 2a is retained by and between the opposed holder plates 20, under the bias of the compression springs 21, 21. Concurrently, the pull tab carrier 23 having one pull tab 3 to rest in its pull tab bed 26 advances toward the slider-assembling station 12 from the opposite side, until the trimming jaw 27 provided on the front end of the pull tab carrier 23 intrudes into the interior of the slider body 2 to remove burs from the slider body 2, as shown in FIG. 3(B). At this same instant, the aperture 8 formed in the front end of the pull tab 3 comes into registry with the gap 9 beneath the distal end 9 of the attachment lug 7 on the slider body 2.

Then, as shown in FIG. 3(C), the punch 22 descends to press down the attachment lug 7 to cause the distal end thereof to fit into the aperture 8 in the pull tab 3, so that the pull tab 3 is pivotally joined to the slider body 2.

After the assembling operation is completed, the punch 22 ascends and the pusher 15 and the pull tab carrier 23 start to retract into their respective original positions. Since the trimming jaw 27 of the pull tab carrier 23 has been forcibly intruded into the rough interior surface of the slider body 2; as the pull tab carrier 23 retracts from the slider-assembling station 12, the slider body 2 accompanies the pull tab carrier 23 due to frictional resistance between the interior of the slider body 2 and the trimming jaw 27 while spreading the opposed holder plates 20, 20 apart from each other against their own resiliency. Continued retraction of the pull tab carrier 23 causes the lower wing 5 of the slider 1 to impinge on the front edge 11a of the second base 11 so that the trimming jaw 27 is pulled off the slider body 2 of the assembled slider 1. The assembled slider 1 thus detached from the trimming jaw 27 falls down through the withdrawal exit 31.

As shown in FIG. 3(D), the retraction of the pusher 15 causes the second lowermost slider body 2b in slackened inclination as shown in FIG. 3(C), to drop from the stepped portion 15′ thereof to the first guide channel 16 and to move angularly into a horizontal posture. Simultaneously, an ensuing slider body 2c slides down the first chute 14 into the guide member 13 via its own gravity, thereby pushing the preceding slider body 2b slightly forwards into a stand-by position in which the preceding slider body 2b is temporarily retained by and between the opposed stoppers 19, 19 under the bias of the plate springs 18, 18. The apparatus is thus restored to the original position, as shown in FIG. 3(E).

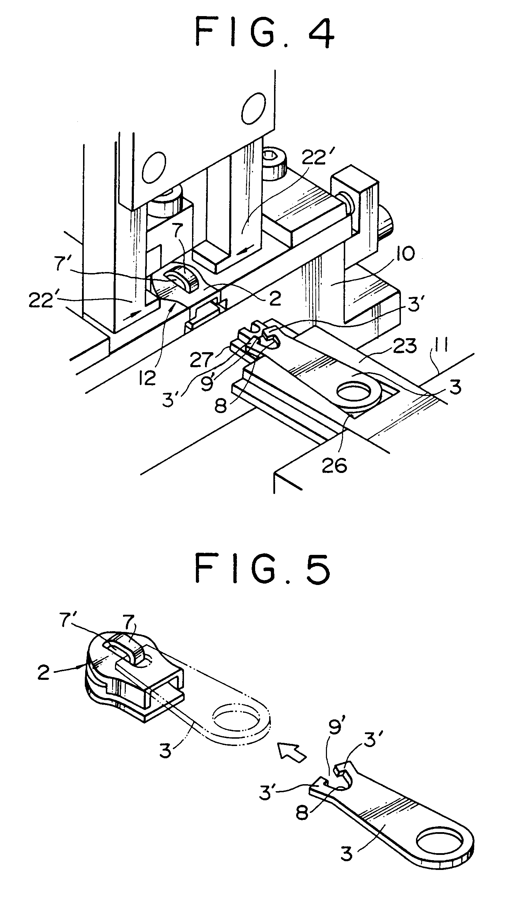

In the preceding embodiment, as test shown in FIG. 2, the attachment lug 7 has beneath its distal end the gap 9 through which the aperture 8 of the pull tab 3 can be joined to the attachment lug 7. Alternatively, as shown in FIG. 5, the attachment lug 7 may have no such gap, but the attachment lug 7 may have its opposite ends joined to the upper surface of the slider body 2 to define an opening 7′ with the upper surface. And, the pull tab 3 may have at its front end a pair of bifurcations or parallel arms 3′, 3′ which are spaced from each other by a gap 9′ slightly greater than the width of the attachment lug 7. In this embodiment, instead of a vertically reciprocative punch 22, a pair of clamping jaws 22′, 22′ are pivotally mounted over the slider-assembling station 12 so as to move their respective lower ends towards and away from each other. As suggested in FIG. 4, when the opposed arms 3′ 3′ come into registry with the opening 7′ of the attachment lug 7, the clamping jaws 22′, 22′ are activated to compress the opposed arms 3′, 3′ towards each other, to thus bend the arms 3′, 3′ into pivotal engagement with the opening 7′ of the attachment lug 7.

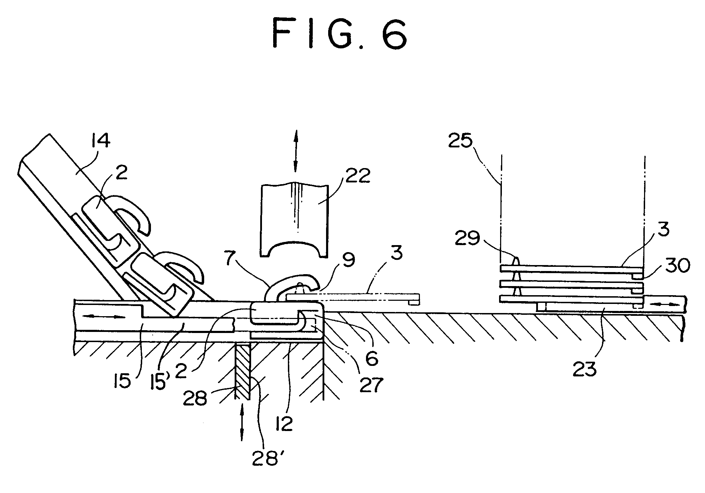

Furthermore, in the first embodiment, a trimming jaw 27 is provided on the front end of the pull tab carrier 23. Instead, as shown in FIG. 6, the stepped portion 15′ of the pusher 15 may function as a trimming jaw. In this event, slider bodies 2 must be fed with their rear ends devoid of diamonds 6 directed to the pusher 15 so that the diamond 6 will not interfere with the stepped portion 15′. This embodiment is advantageous in assembling a locking type slider 1 having a pull tab 3 with a locking prong 29 provided on its lower surface as shown in FIG. 6. This is because, if this pull tab 3 were applied to the preceding embodiment as shown in FIG. 1, the pull tab 3 would rest on the pull tab bed 26 with its pronged surface directed downwards, so that the prong 29 would impinge on the upper wing 4 of the slider body 2. As shown in FIG. 6, the pull tab 3 is provided at its other surface at its opposite end with a protuberance 30, which first serves to cancel out with the height of the prong 29 so as to hold the pull tabs horizontally when they are piled up along the second chute 25, and secondly, serves to facilitate manipulation of the pull tab 3 by fingers in the use of the finished slider 1. In order to hold back the slider body 2 when the stepped portion 15′ of the slider 15 retracts from the interior of the slider body 2, a stopper rod 28 is fitted in the vertical groove 28′ formed beneath and normal to the first guide channel 16 so as to reciprocate vertically therealong into and out of the first guide channel 16.

In the first embodiment, as shown in FIG 3(A), the preceding slider body 2a is pushed forwards from the position shown in FIG. 3(E) all the way to the slider-assembling station 12 by the pusher 15. Alternatively, the preceding slider body 2a may remain in the stand-by position shown in FIG. 3(E). In this event, the pull tab carrier 23 advances beyond the slider-assembling station 12 to the stand-by position of the slider body 2a so as to cause the trimming jaw 27 to intrude into the interior of the slider body 2a to remove burs therein. Thereafter, the pull tab carrier 23 retracts to the slider-assembling station 12 with its trimming jaw 27 carrying the slider body 2a, at which station the punching operation is effected.

Through the method and with the apparatus according to the present invention as set forth hereinabove, it is assured that the slider body and the pull tab can be joined to each other very easily and reliably.

Since the slider body is slackened in its angle of inclination between the inclined posture which it assumes when sliding down along the first chute and the horizontal posture which it assumes when lying in the first guide channel, the angular movement of the slider body is smoothly effected, so that there are no problems that will result in the apparatus becoming inoperative such as two slider bodies being erroneously transported at one time or the front end of the pusher being jammed into between the preceding horizontal slider body and the ensuing inclined slider body, as has been encountered by prior art. Therefore, the transportation of the slider body from the hopper to the slider-assembling station can be effected reliably and smoothly.

Furthermore, burring of the slider body and assembling of the slider are effected concurrently, so that the efficiency of manufacturing the slider is enhanced manifoldly.

Obviously, various modifications and variations of the present invention are possible in the light of the above teaching. It is therefore to be understood that within the scope of the appended claims the invention may be practiced otherwise than as specifically described.

## Claims

1. A method of joining a slider body (2) having an attachment lug (7) on the upper surface thereof and a pull tab (3) having an attachment portion (8; 3′, 3′), characterized in that the method comprises the steps of:
(a) continuously feeding a series of pull tabs (3) to one end of a horizontal transport path (16, 24) ;
(b) continuously feeding a series of slider bodies (2) to the other end of the horizontal transport path (16, 24);
(c) placing a lowermost slider body (2a) and lowermost pull tab (3) into horizontal posture and into opposed relation to each other on the horizontal transport path (16, 24);
(d) moving the lowermost slider body (2a) and the lowermost pull tab (3) towards each other to thus bring the attachment lug (7) of the former (2a) and the attachment portion (8; 3′, 3′) of the latter (3) into registry with each other; and
(e) joining the attachment lug (7) of the slider body (2a) and the attachment portion (8; 3′, 3′) of the pull tab (3).

2. A method according to claim 1, the attachment lug (7) having its one end secured to the upper surface of the slider body (2) and the other end spaced from the upper surface of the slider body (2) to thus define therewith a gap (9) which is slightly greater than the thickness of the pull tab (3), the attachment portion (8; 3′, 3′) being an aperture (8) formed in a front end of the pull tab (3), the joining step (e) comprising the step of pressing the attachment lug (7) down to thus cause the other end thereof to fit into the aperture (8).

3. A method according to claim 1, the attachment lug (7) having its opposite ends joined to the upper surface of the slider body (2) to define an opening (7′) with the upper surface, the attachment portion (8; 3′, 3′) being a pair of parallel arms (3′, 3′) provided on the front end of the pull tab (3) and spaced from each other by a distance slightly greater than the width of the attachment lug (7), the joining step (e) comprising the step of compressing the parallel arms (3′, 3′) sideways to cause the parallel arms (3′, 3′) thereof to fit into the opening (7′).

4. A method according to claim 1, the second-mentioned feeding step (b) being effected along an inclined feeding path and the method further including a step of slackening the angle of inclination of the slider body (2) immediately before the slider body (2) assumes horizontal posture.

5. A method according to claim 1, 2 or 3, the slider body (2) being burred during the moving step (d).

6. An apparatus for joining a slider body (2) having an attachment lug (7) on the upper surface thereof and a pull tab having an attachment portion (8; 3′, 3′), comprising a first chute (14) for continuously feeding a series of slider bodies (2); a first horizontal guide channel (16) communicating with the first chute (14) for receiving the lowermost slider body (2a) in horizontal posture; characterised in that it further comprises a second chute (25) disposed in opposed relation to the first chute (14) for continuously feeding a series of pull tabs (3); a pull tab carrier (23) disposed beneath the lower end of the second chute (25) for receiving the lowermost pull tab (3) in a horizontal posture and reciprocable towards and away from the first horizontal guide channel (16) for moving the lowermost pull tab (3) towards the lowermost slider body (2a) to bring the attachment lug (7) of the slider body (2a) and the attachment portion (8; 3′, 3′) of the pull tab (3) into registry with each other; and means (22; 22′, 22′) for joining the attachment lug (7) of the slider body (2) and the attachment portion (8; 3′, 3′) of the pull tab (3) at a slider-assembling station (12).

7. An apparatus according to claim 6, the attachment lug (7) having one end secured to the upper surface of the slider body (2) and the other end spaced from the upper surface of the slider body (2) to thus define therebetween a gap (9) which is slightly greater than the thickness of the pull tab (3), the attachment portion (8; 3′, 3′) being an aperture (8) formed in the front end of the pull tab (3), the joining means (22; 22′, 22′) comprising a punch (22) disposed over the slider-assembling station (12) and adapted to vertically reciprocate toward and away from the slider-assembling station (12) to press the attachment lug (7) down to thus cause the other end thereof to fit into the aperture (8).

8. An apparatus according to claim 6, the attachment lug (7) having their opposite ends joined to the upper surface of the slider body (2) to define an opening (7′) with the upper surface, the attachment portion (8; 3′, 3′) being a pair of arms (3′, 3′) provided on the front end of the pull tab (3) and spaced from each other by a distance slightly greater than the width of the attachment lug (7), the joining means (22; 22′, 22′) comprising a pair of clamping jaws (22′, 22′) pivotally mounted above the slider-assembling station (12) and adapted to cause their respective lower ends to move sideways towards and away from each other for clamping the arms (3′, 3′) into pivotal engagement with the opening (7′) of the attachment lug (7).

9. An apparatus according to claim 6, the apparatus further including a pusher (15) reciprocable along the first horizontal guide channel (16) towards and away from the slider-assembling station (12) to push the lowermost slider (2a) forwards to the slider-assembling station (12).

10. An apparatus according to claim 6, the pusher (15) including means (15′) for receiving the ensuing slider body (2b) and slackening the angle of inclination thereof while the pusher (15) pushes the preceding slider body (2a) forwards.

11. An apparatus according to claim 10, the inclination slackening means (15′) comprises a stepped portion (15′) provided on the front end of the pusher (15).

12. An apparatus according to claim 6, further including a trimming jaw (27) provided integrally on the front end of the pull tab carrier (23) so as to project forwards thereof and adapted to intrude into the interior of the slider body (2) in order to remove burs therefrom.

## Patentansprüche

1. Verfahren zum Verbinden eines eine Befestigungsöse (7) auf der oberen Oberfläche davon aufweisenden Schieberkörpers (2) mit einer einen Befestigungsbereich (8; 3', 3') aufweisenden Zuglasche (3), dadurch gekennzeichnet, daß das Verfahren umfaßt die Schritte:
(a) fortlaufendes Zuführen einer Folge von Zuglaschen (3) an ein Ende eines horizontalen Transportweges (16, 24);
(b) fortlaufendes Zuführen einer Folge von Schieberkörpern (2) an das andere Ende des horizontalen Transportweges (16, 24);
(c) Anordnen eines untersten Schieberkörpers (2a) und einer untersten Zuglasche (3) in eine horizontale Stellung und in eine gegenüberliegende Beziehung zueinander auf dem horizontalen Transportweg (16, 24);
(d) Bewegen des untersten Schieberkörpers (2a) und der untersten Zuglasche aufeinander zu, um dadurch die Befestigungsöse (7) des zuerst genannten (2a) und den Befestigungsbereich (18; 3', 3') der zuletzt genannten (3) in Ausrichtung zueinander zu bringen; und
(e) Verbinden der Befestigungsöse (7) des Schieberkörpers (2a) mit dem Befestigungsbereich (8; 3', 3') der Zuglasche (3).

2. Verfahren nach Anspruch 1, bei dem das eine Ende der Befestigungsöse (7) sicher an der oberen Oberfläche des Schieberkörpers (2) befestigt ist und das andere Ende sich in einen Abstand von der oberen Oberfläche des Schieberkörpers (2) befindet, um so damit eine Lücke (9) zu bestimmen, die etwas größer ist als die Dicke der Zuglasche (3), der Befestigungsbereich (8; 3', 3') eine in einem vorderen Ende der Zuglasche (3) gebildete Öffnung (8) ist und der Verbindungsschritt (e) den Schritt des Herunterdrückens der Befestigungsöse (7) umfaßt, um dadurch, das Einpassen des anderen Endes davon in die Öffnung (8) zu veranlassen.

3. Verfahren nach Anspruch 1, bei dem die gegenüberliegenden Enden der Befestigungsöse (7) zur Bestimmung einer Öffnung (7') mit der oberen Oberfläche des Schieberkörpers (2) verbunden sind, der Befestigungsbereich (8; 3', 3') aus einem Paar von an dem vorderen Ende der Zuglasche (3) vorgesehenen und sich in einem Abstand, der etwas größer ist als die Weite der Befestigungsöse (7), voneinander befindenden parallelen Armen (3', 3') besteht, und der Verbindungsschritt (e) den Schritt des seitlichen Zusammenpressens der parallelen Arme (3', 3') zur Veranlassung des Einpassens der parallelen Arme (3', 3') davon in die Öffnung (7') umfaßt.

4. Verfahren nach Anspruch 1, bei dem der zweite genannte Zuführschritt (b) entlang eines geneigten Zuführweges bewirkt wird und das Verfahren ferner einen Schritt des Verminderns des Neigungswinkels des Schieberkörpers (2) unmittelbar bevor der Schieberkörper (2) die horizontale Stellung annimmt umfaßt.

5. Verfahren nach Anspruch 1, 2 oder 3, bei dem der Schieberkörper (2) während des Bewegungsschritts (d) entgratet wird.

6. Vorrichtung zum Verbinden eines eine Befestigungsöse (7) auf der oberen Oberfläche davon aufweisenden Schieberkörpers (2) mit einer einen Befestigungsbereich (8; 3', 3') aufweisenden Zuglasche, umfassend eine erste Rutsche (14) zum fortlaufenden Zuführen einer Folge von Schieberkörpern (2); einen ersten mit der ersten Rutsche (14) in Verbindung stehenden horizontalen Führungskanal (16) zum Aufnehmen des untersten Schieberkörpers (2a) in einer horizontalen Stellung; dadurch gekennzeichnet, daß sie ferner umfaßt eine in gegenüberliegender Beziehung zu der ersten Rutsche (14) angeordnete zweite Rutsche (25) zum fortlaufenden Zuführen einer Folge von Zuglaschen (3); einen unter dem unteren Ende der zweiten Rutsche (25) angeordneten, auf den ersten horizontalen Führungskanal (16) zu und von diesem weg hin und her bewegbaren Zuglaschenträger (23) zum Aufnehmen der untersten Zuglasche (3) in einer horizontalen Stellung zum Bewegen der untersten Zuglasche (3) auf den untersten Schieberkörper (2a) zu, um die Befestigungsöse (7) des Schieberkörpers (2a) und den Befestigungsbereich (8; 3', 3') der Zuglasche (3) in Ausrichtung zueinander zu bringen und eine Einrichtung (22; 22', 22') zum Verbinden der Befestigungsöse (7) des Schieberkörpers (2) mit dem Befestigungsbereich (8; 3', 3') der Zuglasche (3) an einer Schieberzusammenbaustation (12).

7. Vorrichtung nach Anspruch 6, bei der ein Ende der Befestigungsöse (7) sicher an der oberen Oberfläche des Schieberkörpers (2) befestigt ist und das andere Ende sich in einem Abstand von der oberen Oberfläche des Schieberkörpers (2) befindet, um so eine Lücke (9) dazwischen zu bestimmen, die etwas größer ist als die Dicke der Zuglasche (3), der Befestigungsbereich (8; 3', 3') eine in dem vorderen Ende der Zuglasche (3) gebildete Öffnung (8) ist, und die Verbindungseinrichtung (22; 22', 22') umfaßt einen über der Schieberzusammenbaustation (12) angeordneten und zum vertikalen hin und herbewegen auf die Schieberzusammenbaustation (12) zu und von dieser weg angepaßten Stanzstempel (22), um die Befestigungsöse (7) zur Veranlassung des Einpassens des anderen Endes davon in die Öffnung (8) herabzudrücken.

8. Vorrichtung nach Anspruch 6, bei der die gegenüberliegenden Enden der Befestigungsöse (7) zur Bestimmung einer Öffnung (7') mit der oberen Oberfläche des Schieberkörpers (2) verbunden sind, der Befestigungsbereich (8; 3', 3') aus einem Paar von an dem vorderen Ende der Zuglasche (3) vorgesehenen und sich voneinander in einem Abstand, der etwas größer ist als die Weite der Befestigungsöse (7), befindenden Armen (3', 3') besteht und die Verbindungseinrichtung (22; 22', 22') umfaßt ein Paar von Klammerbacken (22', 22'), die schwenkbar über der Schieberzusammenbaustation (12) angebracht und zur Veranlassung der seitlichen Bewegung ihrer jeweils unteren Enden aufeinander zu und voneinander weg angepaßt sind, zum Klammern der Arme (3', 3') in einen Schwenkeingriff mit der Öffnung (7') der Befestigungsöse (7).

9. Vorrichtung nach Anspruch 6, bei der die Vorrichtung ferner umfaßt eine entlang des ersten horizontalen Führungskanals (16) auf die Schieberzusammenbaustation (12) zu und von dieser weg hin und her bewegbare Schubvorrichtung (15), um den untersten Schieber (2a) in Richtung auf die Schieberzusammenbaustation (12) nach vorne zu schieben.

10. Vorrichtung nach Anspruch 6, bei der die Schubvorrichtung (15) eine Einrichtung (15') zum Aufnehmen des nachfolgenden Schieberkörpers (2b) und zum Vermindern des Neigungswinkels davon während die Schubvorrichtung den vorhergehenden Schieberkörper (2a) nach vorne schiebt umfaßt.

11. Vorrichtung nach Anspruch 10, bei der die Neigungsverminderungseinrichtung (15') einen an dem vorderen Ende der Schubvorrichtung (15) vorgesehenen gestuften Bereich (15') umfaßt.

12. Vorrichtung nach Anspruch 6, die ferner eine Kantenentgratungsbacke (27) umfaßt, die einstückig an dem vorderen Ende des Zuglaschenträgers (23) vorgesehen ist, um davon nach vorne abzustehen, und die zum Eindringen in das Innere des Schieberkörpers (2) zum Entfernen von Graten davon angepaßt ist.

## Revendications

1. Procédé pour réunir un corps de curseur (2), comportant une patte de fixation (7) sur sa surface supérieure, et une tirette (3) comportant une partie de fixation (8; 3', 3'), caractérisé en ce que le procédé comprend les étapes consistant à:
(a) amener en continu une série de tirettes (3) en une extrémité d'un chemin de transport (16, 24) horizontal,
(b) amener en continu une série de corps de curseur (2) en l'autre extrémité du chemin de transport (16, 24) horizontal,
(c) placer le corps de curseur situé le plus bas (2a) et la tirette la plus basse (3) en position horizontale et en vis-à-vis l'un de l'autre sur le chemin de transport (16, 24) horizontal,
(d) déplacer le corps de curseur le plus bas (2a) et la tirette la plus basse (3) l'un vers l'autre pour amener ainsi la patte de fixation (7) du premier (2a) et la partie de fixation (8; 3', 3') de la deuxième (3) en correspondance l'une avec l'autre, et
(e) réunir la patte de fixation (7) du corps de curseur (2a) avec la partie de fixation (8; 3', 3') de la tirette (3).

2. Procédé selon la revendication 1, la patte de fixation (7) ayant sa première extrémité fixée à la surface supérieure du corps de curseur (2) et son autre extrémité espacée de la surface supérieure du corps de curseur (2) pour définir ainsi entre elles un intervalle (9) qui est légèrement supérieur à l'épaisseur de la tirette (3), la partie de fixation (8; 3', 3') étant une ouverture (8) formée dans une extrémité avant de la tirette (3), l'étape de réunion (e) comprenant l'étape qui consiste à presser la patte de fixation (7) vers le bas pour amener ainsi l'autre extrémité de celle-ci à s'emboîter dans l'ouverture (8).

3. Procédé selon la revendication 1, la patte de fixation (7) ayant ses extrémités opposées réunies à la surface supérieure du corps de curseur (2) pour définir une ouverture (7') avec la surface supérieure, la partie de fixation (8; 3', 3') étant une paire de bras parallèles (3', 3') placés sur l'extrémité avant de la tirette (3) et espacés l'un de l'autre d'une distance légèrement supérieure à la largeur de la patte de fixation (7), l'étape de réunion (e) comprenant l'étape qui consiste à comprimer les bras parallèles (3', 3') sur les côtés pour amener les bras parallèles (3', 3') à s'emboîter dans l'ouverture (7').

4. Procédé selon la revendication 1, l'étape d'amenée (b) mentionnée en second étant effectuée le long d'un chemin d'amenée incliné et le procédé comprenant en outre une étape qui consiste à supprimer l'angle d'inclinaison du corps de curseur (2) juste avant que le corps de curseur (2) ne prenne la position horizontale.

5. Procédé selon la revendication 1, 2 ou 3, le corps de curseur (2) étant ébavuré pendant l'étape de déplacement (d).

6. Appareil pour réunir un corps de curseur (2), compor- une patte de fixation (7) sur sa surface supérieure, et une tirette comportant une partie de fixation (8; 3', 3'), comprenant:
- une première goulotte (14) pour amener en continu une série de corps de curseur (2),
- un premier canal de guidage (16) horizontal qui communique avec la première goulotte (14) pour recevoir le corps de curseur (2a) situé le plus bas en position horizontale,
caractérisé en ce qu'il comprend en outre:
- une seconde goulotte (25) placée à l'opposé de la première goulotte (14) pour amener en continu une série de tirettes (3),
- une porte-tirette (23) placé en dessous de l'extrémité inférieure de la seconde goulotte (25) pour recevoir la tirette (3) située le plus bas en position horizontale, et pouvant se rapprocher et s'éloigner du premier canal de guidage (16) horizontal afin de déplacer la tirette (3) la plus basse vers le corps de curseur (2a) situé le plus bas pour amener la patte de fixation (7) du corps de curseur (2a) et la partie de fixation (8; 3', 3') de la tirette (3) en correspondance l'une avec l'autre, et
- un moyen (22; 22', 22') pour réunir la patte de fixation (7) du corps de curseur (2) avec la partie de fixation (8; 3', 3') de la tirette (3) au niveau d'un poste (12) de montage de curseur.

7. Appareil selon la revendication 6, la patte de fixation (7) ayant une extrémité fixée à la surface supérieure du corps de curseur (2) et l'autre extrémité espacée de la surface supérieure du corps de curseur (2) pour définir ainsi entre elles un intervalle (9) qui est légèrement supérieur à l'épaisseur de la tirette (3), la partie de fixation (8; 3', 3') étant une ouverture (8) formée dans l'extrémité avant de la tirette (3), le moyen de réunion (22; 22', 22') comprenant un poinçon (22) placé sur le poste (12) de montage de curseur et apte à se déplacer en va-et-vient vertical depuis le poste (12) de montage de curseur pour presser la patte de fixation (7) vers le bas et amener ainsi son autre extrémité à s'emboîter dans l'ouverture (8).

8. Appareil selon la revendication 6, la patte de fixation (7) ayant ses extrémités opposées réunies à la surface supérieure du corps de curseur (2) pour définir une ouverture (7') avec la surface supérieure, la partie de fixation (8; 3', 3') étant une paire de bras (3', 3') placés sur l'extrémité avant de la tirette (3) et espacés l'un de l'autre d'une distance légèrement supérieure à la largeur de la patte de fixation (7), le moyen de réunion (22; 22', 22') comprenant une paire de mâchoires de serrage (22', 22') montées de façon pivotante au dessus du poste (12) de montage de curseur et aptes à amener leurs extrémités inférieures respectives à s'éloigner et se rapprocher l'une de l'autre sur les côtés pour pincer les bras (3', 3') en engagement pivotant avec l'ouverture (7') de la patte de fixation (7).

9. Appareil selon la revendication 6, l'appareil comprenant en outre un poussoir (15) pouvant aller et venir le long du premier canal de guidage (16) horizontal pour s'éloigner et se rapprocher du poste (12) de montage de curseur afin de pousser le curseur le plus bas (2a) en avant vers le poste (12) de montage de curseur.

10. Appareil selon la revendication 6, le poussoir (15) incluant un moyen (15') pour recevoir le corps de curseur suivant (2b) et en supprimer l'angle d'inclinaison tandis que le poussoir (15) pousse le corps de curseur précédent (2a) vers l'avant.

11. Appareil selon la revendication 10, le moyen (15') de suppression de l'inclinaison comprenant une partie en escalier (15') placée sur l'extrémité avant du poussoir (15).

12. Appareil selon la revendication 6, incluant en outre une mâchoire d'ébavurage (27) intégrée sur l'extrémité avant du porte-tirette (23) afin de dépasser vers l'avant de celui-ci, apte à pénétrer à l'intérieur du corps de curseur (2) pour en retirer les bavures.
